# EUROPEAN PATENT APPLICATION

(11) **EP 2 169 486 A2**
(43) Date of publication of application: **31.03.2010**
(21) Application number: 09166414.4
(22) Date of filing: 24.07.2009
(51) Int. Cl.: G05B 19/042, G05B 23/02

(54) **Intermittent fault detection and reasoning**

(30) Priority: 30.09.2008 US 241774
(71) Applicant: Honeywell International Inc., Morristown, NJ 07962 (US)
(72) Inventor: Kolbet, David, Morristown, NJ 07962-2245 (US); Shao, Qingqiu Ginger, Morristown, NJ 07962-2245 (US); Magnuson, Randy, Morristown, NJ 07962-2245 (US); Barton, Bradley John, Morristown, NJ 07962-2245 (US); Maewal, Akhilesh, Morristown, NJ 07962-2245 (US)
(74) Representative: Buckley, Guy Julian

(57) **Abstract**

A method for diagnostic reasoning of faults appearing in a vehicle health monitoring system (VHM) is provided. One of alternatively a signal mode or a failure mode state is identified based on an input. If a signal is identified, the signal is queried to determine if the signal indicts a failure mode. If the signal indicts the failure mode, an intermittent watch flag is set for the failure mode. A count representing a number of occurrences of the signal as an intermittent fault is incremented. It is determined if the count exceeds a predetermined threshold. If the count exceeds the predetermined threshold, the intermittent fault is determined to be a permanent fault.

## Description

### STATEMENT REGARDING FEDERALLY SPONSORED RESEARCH OR DEVELOPMENT

This invention was made with Government support under Agreement No. W56HZV-05-C-0724 awarded by United States Army. The Government may have certain rights in this invention.

### FIELD OF THE INVENTION

The present invention generally relates to prognostics and diagnostics for vehicle systems, and more particularly, but not exclusively, to a mechanism for detecting and interpreting intermittent faults for vehicle health monitoring systems.

### BACKGROUND OF THE INVENTION

Vehicles are used in a variety of settings. For example, aircraft and spacecraft are used in aerospace settings, automobiles, buses, and trains are used in surface settings, and marine vehicles are used on or in marine environments. Telematics, or the integrated use of telecommunications and informatics, also known as information and communications technology (ICT), has become more prevalently used and more important to users and operators of vehicles.

For example, telematics systems may be used in automotive and aircraft navigation systems, logistics, safety communications, and the like. In some cases, a problem may arise that may require troubleshooting and, perhaps, repair of the vehicle. Currently, portions of telematics systems may be used to assist in vehicle health maintenance (troubleshooting and repair).

Vehicle health monitoring (VHM) telematics systems continue to evolve in complexity and range of implementation. However, current systems lack an ability to accurately detect, interpret, and incorporate intermittent failures into the system's determinations. Intermittent failures are temporary physical failures caused by an internal part operating outside the range of its specified behavior. Intermittent failures usually exhibit a relatively high occurrence rate after their first appearance, and tend to inevitably become permanent. A variety of factors may influence intermittent failure readings, including noise and environmental effects. These factors may complicate the ability for a VHM to accurately determine the current and future state of the vehicle.

Accordingly, a need exists for a mechanism to detect and interpret intermittent failures for vehicle health maintenance systems to help alleviate the current issues described above. A need exists for such a mechanism to take the various factors influencing intermittent failure readings into account, such as noise and other environmental issues. Furthermore, other desirable features and characteristics of the present invention will become apparent from the subsequent detailed description of the invention and the appended claims, taken in conjunction with the accompanying drawings and this background of the invention.

### BRIEF SUMMARY OF THE INVENTION

In one embodiment, by way of example only, a method for diagnostic reasoning of faults appearing in a vehicle health monitoring system (VHM) is provided. One of alternatively a signal mode or a failure mode state is identified based on an input. If a signal is identified, the signal is queried to determine if the signal indicts a failure mode. If the signal indicts the failure mode, an intermittent watch flag is set for the failure mode. A count representing a number of occurrences of the signal as an intermittent fault is incremented. It is determined if the count exceeds a predetermined threshold. If the count exceeds the predetermined threshold, the intermittent fault is determined to be a permanent fault.

In another embodiment, again by way of example only, a system for diagnostic reasoning of faults appearing in a vehicle health monitoring system (VHM) is provided. A diagnostic reasoner module is in communication with a vehicle. The diagnostic reasoner module is adapted for identifying alternatively one of a signal or a failure mode state based on an input, and if a signal is identified, querying if the signal indicts a failure mode. If the signal indicts the failure mode, an intermittent watch flag is set for the failure mode. A count representing a number of occurrences of the signal as an intermittent fault is incremented. It is determined if the count exceeds a predetermined threshold. If the count exceeds the predetermined threshold, the intermittent fault is determined to be a permanent fault.

In still another embodiment, a computer program product for diagnostic reasoning of faults appearing in a vehicle health monitoring system (VHM) is provided. The computer program product comprises a computer-readable storage medium having computer-readable program code portions stored therein. The computer-readable program code portions comprise a first executable portion for identifying alternatively one of a signal or a failure mode state based on an input, and a second executable portion for, if a signal is identified, querying if the signal indicts a failure mode. If the signal indicts the failure mode, an intermittent watch flag is set for the failure mode. A count representing a number of occurrences of the signal as an intermittent fault is incremented. It is determined if the count exceeds a predetermined threshold. If the count exceeds the predetermined threshold, the intermittent fault is determined to be a permanent fault.

### BRIEF DESCRIPTION OF THE DRAWINGS

The present invention will hereinafter be described in conjunction with the following drawing figures, wherein like numerals denote like elements, and

FIG. 1 illustrates an exemplary diagnostic reasoner module in communication with a vehicle or other complex system;

FIG. 2 illustrates an exemplary graph of alpha-count intermittent fault detection and reasoning;

FIG. 3 illustrates a second exemplary graph of alpha-count intermittent fault detection and reasoning;

FIG. 4 illustrates an exemplary graph of time-triggered Page-Hinkley intermittent fault detection and reasoning;

FIG. 5 illustrates an exemplary graph of event-triggered Page-Hinkley intermittent fault detection and reasoning; and

FIG. 6 illustrates exemplary detection, interpretation, and incorporation of intermittent fault processing in failure mode reasoning.

### DETAILED DESCRIPTION OF THE INVENTION

The following detailed description of the invention is merely exemplary in nature and is not intended to limit the invention or the application and uses of the invention. Furthermore, there is no intention to be bound by any theory presented in the preceding background of the invention or the following detailed description of the invention.

Factors responsible for the intermittent failures in a system can appear in different forms. In a first instance, the intermittent failure may not be due to system faults but other factors such as an environment that is out of the system's operational spec. This kind of failure, although detectable by diagnostic reasoning if modeled, cannot be tracked to a system failure.

In a second instance, the intermittent failure may be due to a transient system fault, however the factors involved in the fault are noisy, not modeled or well understood in the reasoning. The noisy factors may be the factors that are deemed insignificant through analysis, or other unknown factors.

In a third instance, the intermittent failure may be due to a transient system fault that is modeled, and the failure mode can be isolated through diagnostic modeling. In this case, however, some failures may retain their transient nature (such as a loose connection), while others may lead to permanent failures due to the destructive nature of the intermittent condition (such as a power fluctuation).

A challenge for diagnostics of intermittent faults is to distinguish the physical system faults from the faults that result from temporary noise and environmental effects, yet retain an ability to decide when the reasoning can declare that a permanent fault has occurred and follow-on maintenance action is needed.

The present description and following claimed subject matter present exemplary method, system, and computer program product embodiments of a mechanism to detect, integrate, and interpret intermittent faults in a vehicle health monitoring system. The illustrated embodiments implement a variety of methodologies for performing this functionality, including several algorithms in which the detected occurrences of intermittent faults are aggregated. These aggregated values are then compared against a predetermined threshold to determine if the intermittent faults have become permanent faults as will be further described.

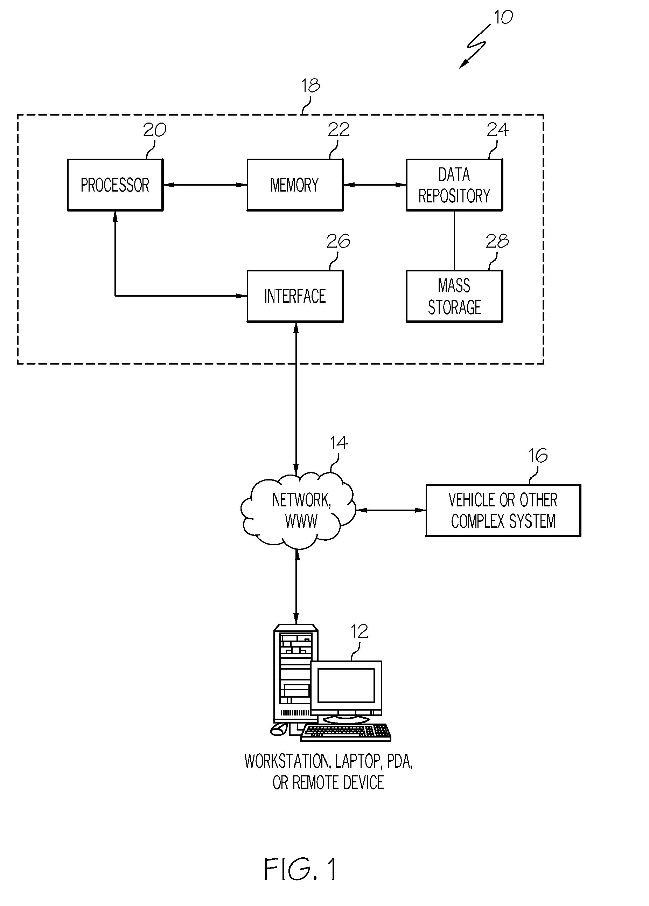

FIG. 1, following, illustrates an exemplary computing environment 10 in which various aspects of the previous description and following claimed subject matter may be implemented. Computer workstation 12, laptop 12, PDA 12, remote device 12, or a similar device is connected to a network 14. Network 14 can include a system bus, an intranet, extranet, and similar network connectivity to other computer devices such as the worldwide-web (WWW). The skilled artisan will appreciate that network 14 may include elements of wired and wireless functionality, such as a wireless communication protocol.

A diagnostic reasoner module 18 having a connection to network 14 includes a processor 20, memory 22, data repository 24, interface 26, and mass storage 28. As one skilled in the art will appreciate, the components of reasoner 18 may vary from application to application. In addition, more than one reasoner 18, or the components thereof, may be connected to network 14 in a particular implementation. Data repository 24 may include one or multiple databases, locations, configurations, protocols, mediums, and the like. Diagnostic reasoner module 18 may be adapted to perform various prognostics and diagnostic functionality as will be described, such as determining if a series of detected intermittent faults have become permanent according to the present invention.

A vehicle or other complex system 16 is also coupled to the network 14. Vehicle 16 may also include such components as an interface, processor, memory, and mass storage as one skilled in the art will appreciate. Such components are not illustrated for purposes of convenience. In addition, a number of vehicles 16 may be connected across the network 14. For example, a first vehicle 16 may be located in a first location. A second vehicle 16 may be located across network 14 in a second location, and so forth.

Device 12 uses hardware, software, firmware, or a combination thereof to access network 14, vehicle 16, and module 18. A user, for example, may execute a web browser, which executes software on the workstation and queries the vehicle 16 and/or module 18 for data generated from application of the following illustrated embodiments. The data may be read from mass storage device 28 and provided through interface 26 and network 14 to workstation 12 where it is displayed to the user as part of a graphical user interface (GUI) on a suitable display device such as a monitor.

Diagnostic reasoner module 18 may be adapted to make various determinations as to whether an intermittent fault has become permanent, as previously described. To make such determinations, a variety of methodologies may be implemented by module 18. Each of these methodologies utilizes predefined criteria to determine if the intermittent fault has become permanent. Faulty inputs are processed to accumulate counts of occurrences of intermittent faults. In the following description, four of such exemplary methodologies are presented to perform such accumulation. Three of the four are time-triggered, based on a series of binary signals. The fourth is event-triggered, only activated when a faulty signal occurs. Tuning factors are incorporated into the methodologies to allow for additional computational flexibility and accuracy.

The first exemplary methodology described above implements a time-triggered alpha count algorithm. In this algorithm, x (k) is the series of binary error status signals. A value of "1" is defined as faulty, whereas a value of "0" is not faulty. 0 < K < 1 is defined
where K is a tuning factor.

The following are additionally defined: α (0) = 0 is defined as an initial counting value, αT < 1/(1-K) is defined as the threshold after which the permanent fault is declared and corrective action will be taken. If x (k) = 0, α (k) = α (k-1) * K. Ifx(k) = 1, α (k) = α (k-1)+1.

The time-triggered alpha count algorithm takes an input signal whenever the input signal is received. The signal value is checked to see if it is faulty or not faulty. For each faulty signal, the count is incremented by 1. For each non-faulty signal, the count is discounted by the predefined parameter K (<1) until the accumulated value reaches the predefined criteria of αT, which is less than 1/(1-K).

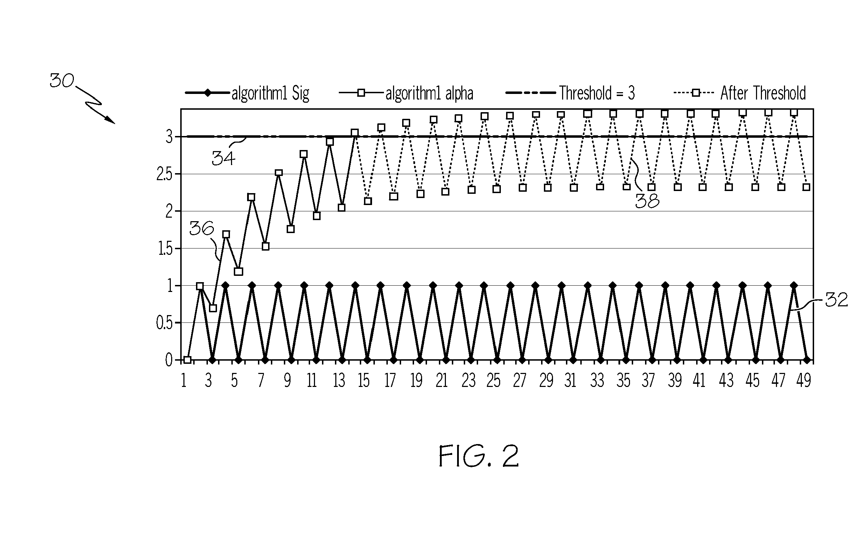

Turning to FIG. 2, an exemplary graph 30 of the implementation of the first methodology described above incorporating the time-triggered alpha count algorithm is illustrated, for K=0.7, and a threshold value 34 of 3, where the limit = 1 / (1 - 0.7) = 3.33 > 3. Input signal 32 is shown demonstrating an intermittent fault, where a first reading shows not faulty (0) and a second reading shows faulty (1). The signal as incorporated into the algorithm (algorithm alpha line 36) is determined to be a permanent fault (after threshold line 38) as shown at approximately n>14 input signals.

The second exemplary methodology described above again implements a time-triggered alpha count algorithm. In this algorithm, x (k) is again the series of binary error status signals. A value of "1" is again defined as faulty, whereas a value of "0" is not faulty. 0 < Δ < 1 is defined, where Δ is the tuning factor, α (0) = 0 is again defined as the initial counting value, and αT > 1 is defined as the threshold after which the permanent fault is declared and corrective action will be taken. If x (k) = 0, α (k) = α (k-1) - Δ. If x (k) = 1,α (k) = α (k-1) + 1. If α (k) < 0, α (k) = 0. If α (k) > αT, then a permanent failure is determined.

The second exemplary methodology is similar to the first methodology as described above, only that when the non-faulty signal comes in, instead of discounting the total accumulated number by K, the methodology subtracts the accumulated count by delta (<1). If the faulty, non-faulty pattern of the input is alternated, the accumulated number will then be increased by 1, and then reduced by delta, and so on, until the criteria is reached

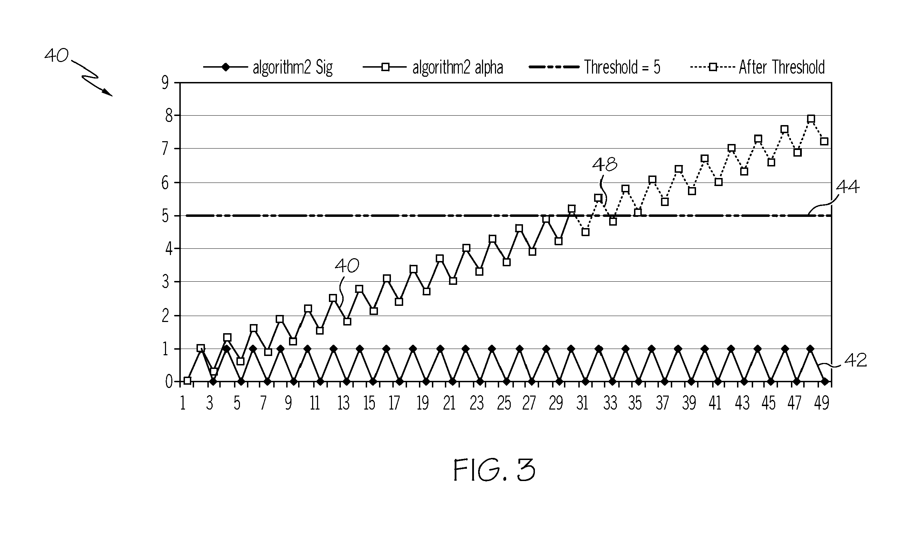

Turning to FIG. 3, an exemplary graph 40 of the implementation of the second methodology described above incorporating the additional time-triggered alpha count algorithm is illustrated, for K=0.7, and a threshold value 44 of 5. Input signal 42 is shown demonstrating an intermittent fault, where a first reading shows not faulty (0) and a second reading shows faulty (1). The signal as incorporated into the algorithm (algorithm alpha line 46) is determined to be a permanent fault (after threshold line 48) as shown at approximately n>17 input signals.

The third exemplary methodology described above implements a time-triggered Page-Hinkley algorithm. In this algorithm, x (k) is again the series of binary error status signals, where "1" is faulty, and "0" is not faulty. Further, q0 is the probability of a component detected as healthy given that component is truly Healthy, where p0 (x) = P(X=x Healthy), p0 (0) = P(X=0 | Healthy) = q0 (given healthy, detected healthy), p0 (1) = P(X=1 | Healthy) = 1 - q0 (given healthy, detected faulty - false alarm/false negative). Further, q1 is the probability of a component detected as healthy given that component is truly Faulty, p0 (x) = P(X=x Faulty), and p0 (0) = P(X=0 | Faulty) = q1, (given faulty, detected as healthy - false positive), p0 (1) = P(X=1 | Faulty) = 1 - q1 (given faulty, detected as faulty - detectability), where 1 - q0 < q1 < q0 - so that q0 > 0.5, and q1 < 0.5, (i.e. a false detection is less than 50%) (q1/q0<1, log(q1/q0) < 0; 1-q0<0.5, 1-q1 > 0.5, log[(1-ql)/(1-q0)] > 0 ), or q0 < q1 < 1- q0 - so that q0 < 0.5, and q1 > 0.5, i.e. a false detection is greater than 50% (q1/q0>1, log(q1/q0) > 0; 1-q0>0.5, 1-q1 < 0.5, log[(1-q1)/(1-q0)] < 0 ).

The initial value is defined as g (0) = 0, and the threshold after which the permanent fault is declared and corrective action is taken is defined as αT> 1. If x (k) = 0, g (k) = g (k-1) + log (q1 / q0). For low quality sensors (q0<0.5, q1>0.5)) any detection of non-faulty will add to the faulty count (log(q1/q0) > 0). For high quality sensors, any detection of non-faulty will reduce the faulty count. If if x (k) =1, g (k) = g (k-1) + log [(1-q1) / (1-q0)]. For low quality sensors (q0<0.5, q1>0.5) any detection of faulty will reduce the faulty count (log(1-q1)/(1-q0) < 0). For high quality sensors, any detection of faulty will add to the faulty count. If g (k) < 0, g (k) =0. Finally, if g (k) > αT, then a permanent fault is declared.

The third exemplary methodology again takes the input signal whenever it comes in, and then again checks the signal value to see if it is faulty or not faulty. The Page-Hinkley algorithm is unique in the sense that the quality of the signal is taken into account. For low quality signals, the reported non-faulty input will actually increase the accumulated faulty count, as it may largely be a false alarm.

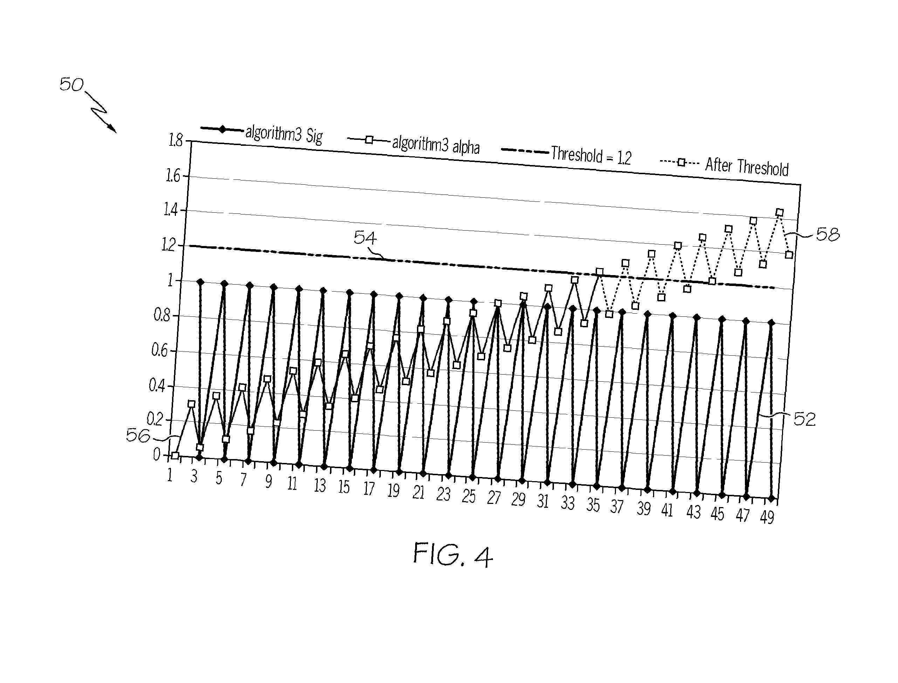

Turning to FIG. 4, an exemplary graph 50 of the implementation of the third methodology described above incorporating the Page-Hinkley algorithm is illustrated, for q0 = 0.7, q1 = 0.4 > 0.3 = (1 - 0.7), with a threshold value 54 > 1 (approximately 1.2). Input signal 52 is shown demonstrating an intermittent fault, where a first reading shows not faulty (0) and a second reading shows faulty (1). The signal as incorporated into the algorithm (algorithm alpha line 56) is determined to be a permanent fault (after threshold line 58) as shown at approximately n>34 input signals.

The fourth exemplary methodology described above implements an event-triggered Page-Hinkley algorithm. In this algorithm, x (k) is again the series of binary error status signals, where "1" is faulty, and "0" is not faulty. The instants k with x (k) =1 are labeled as n1, n2,...,ni. Further, t_i = t_(ni-1) - t_ni (the time duration between two successive instants ), αT > 1 (again the threshold after which the permanent fault is declared and corrective action will be taken), and pT (t) = (1 / T) * e^ (-t / T) (probability is an exponential distribution with the time interval t when a faulty signal occurs, where T^2 is the variance of the time interval t). T0 > T1 > 1, where T0 and T1 are tuning parameters, h (n1) = 0, and h (ni) = h (ni-1) + log [(pT1 (ti) / pT0 (ti)] (one distribution of t with less variance (T1) is compared with the other distribution with a larger variance (T0)). If h (ni) < 0, h (ni) = 0. If h (ni)> αT, then a failure is detected.

The fourth exemplary methodology pre-defines an exponential distribution for the time interval that a fault may be reported. Following the detection of the time interval between two reported faulty events, the predefined exponential distributions are applied to measure the increase of the accumulated fault report counting.

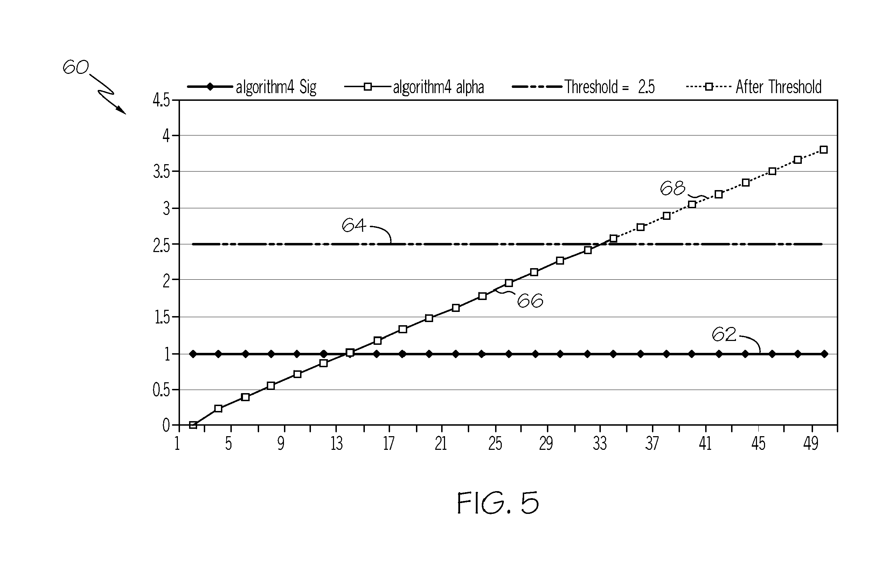

Turning to FIG. 5, an exemplary graph 60 of the implementation of the fourth methodology described above incorporating the Page-Hinkley algorithm is illustrated, for T0=6, T1=3 and αT (threshold) =2.5. Input signal 62 is shown demonstrating an intermittent fault received over time, with reoccurring values of 1 (faulty). The signal as incorporated into the algorithm (algorithm alpha line 66) is determined to be a permanent fault (after threshold line 68) as shown at approximately n>33 input signals.

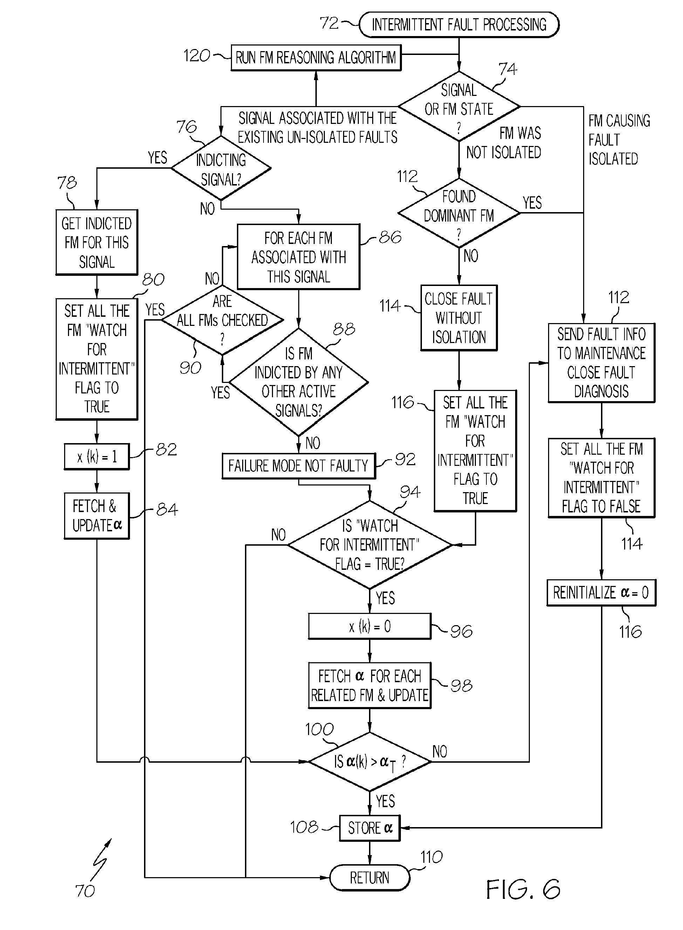

FIG. 6, following, illustrates a method 70 of exemplary detection, interpretation, and incorporation of intermittent fault processing in failure mode reasoning. As one skilled in the art will appreciate, various steps in the method 70 may be implemented in differing ways to suit a particular application. For example, various steps in the method 70 may be omitted, modified, or may be carried out in differing orders. In addition, various steps may be implemented by differing means, such as by hardware, firmware, or software, or a combination thereof operational on, or associated with, the webservice architecture. For example, the method 70 may be embodied in computer program products, such as digital versatile discs (DVDs) compact discs (CDs) or other storage media. The computer program products may include computer readable program code having executable portions for performing various steps as illustrated in the following methods. The method 70 may be implemented wholly, or in part, by diagnostic reasoner module 18 (FIG. 1).

The intermittent fault processing of method 70 begins (step 72) with the identification, based on an input, of alternatively a signal or a fault state (step 74). If a signal is identified, it is assumed to be associated with existing un-isolated system faults, and is acted upon by a Failure Mode Reasoning Algorithm which may update a Fault State (step 120). This algorithm represents any available reasoning algorithms designed to detect and isolate non-intermittent faults and is complimented by this intermittent fault processing algorithm. Furthermore, it is queried to determine if it is indicting (step 76) of a failure mode (FM). If so, each of the indicted failure modes is assembled for the signal (step 78). Each of the failure modes' intermittent watch flag(s) are set to true (step 80). The intermittent watch flag(s) indicate to the system that a potential intermittent fault has been detected, and to implement further intermittent fault processing. Because the signal is representative of a faulty condition, x(k) =1 (step 82), the existing alpha count is fetched and updated according to a methodology such as the four described previously (step 84). If the updated alpha count (incremented count total) is above the predetermined threshold (step 100), the intermittent fault is determined to be permanent (the fault is declared to be isolated), and the appropriate responder, such as maintenance personnel or devices, are notified (step102). The intermittent watch flags for the failure modes in this set are set to false (step 104) and the alpha counts are reinitialize to zero (step 106) and stored (step 108). The method 70 then returns to step 72 for further processing (step 110).

If the received signal is no longer indicting (no longer representative of a faulty condition) (again, step 76), the system queries whether, for each failure mode associated with the instant signal (step 86), that the failure mode is indicted by any other active signals (step 88). If yes, the system queries whether all failure modes have been examined (step 90). If so, the method returns (again, step 110) to step 72 for further processing.

If an indicting signal failure mode is not indicted by any other active signals, the instant failure mode is declared to be not faulty (step 92). The system queries if the intermittent watch flag to determine if it is set to true (step 94). If so, because the signal is non-indicting, x(k)=0 (non faulty) (step 96). The existing alpha count is fetched and updated again according to the methodology used (step 98). Since the instant signal is non faulty, the methodology offsets the incremented count by a certain predetermined amount. Again, the system queries if the updated alpha account is above the predetermined threshold (again, step 100), and if so, declares an isolated fault (again, step 102). The intermittent watch flags for the failure modes are set to false (again step 104), the alpha counts are reinitialized to zero and stored (again steps 106 and 108) and returns (again, step 110). If not, the updated alpha count is stored (step 108) and the method again returns (again, step 110).

If the system alternatively identifies a fault state (again, step 74) has been updated but no failure mode was isolated, and a dominant failure mode is not identified (step 112), then fault processing is closed without isolation (step 114), and the intermittent watch flags for all associated failure modes are set to true (step 116). Steps 94-110 repeat as previously described.

If the failure mode is isolated (again, step 74) or a dominant failure mode is found (again, step 112), the fault information is sent to the responder (step 102) and steps 104-110 repeat as previously described.

Those of ordinary skill in the art will appreciate that the hardware depicted in FIG. 1 may vary. For example, other peripheral devices, such as optical disk drives and the like, also may be used in addition to or in place of the hardware depicted. The depicted example is not meant to imply architectural limitations with respect to the present invention.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like.

Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

Reference throughout this specification to "one embodiment," "an embodiment," or similar language means that a particular feature, structure, or characteristic described in connection with the embodiment is included in at least one embodiment of the present invention. Thus, appearances of the phrases "in one embodiment," "in an embodiment," and similar language throughout this specification may, but do not necessarily, all refer to the same embodiment.

Furthermore, the described features, structures, or characteristics of the invention may be combined in any suitable manner in one or more embodiments. In the following description, numerous specific details are provided, such as examples of programming, software modules, user selections, network transactions, database queries, database structures, hardware modules, hardware circuits, hardware chips, etc., to provide a thorough understanding of embodiments of the invention. One skilled in the relevant art will recognize, however, that the invention may be practiced without one or more of the specific details, or with other methods, components, materials, and so forth. In other instances, well-known structures, materials, or operations are not shown or described in detail to avoid obscuring aspects of the invention.

While one or more embodiments of the present invention have been illustrated in detail, the skilled artisan will appreciate that modifications and adaptations to those embodiments may be made without departing from the scope of the present invention as set forth in the following claims.

## Claims

1. A method for diagnostic reasoning of faults appearing in a vehicle health monitoring system (VHM), comprising:
identifying alternatively one of a signal or a fault state change based on an input (74); and
if a signal is identified, querying if the signal indicts a failure mode (76), wherein if the signal indicts the failure mode:
setting an intermittent watch flag for the failure mode (80),
incrementing a count representing a number of occurrences of the signal as an intermittent fault (82, 84),
determining if the count exceeds a predetermined threshold (100), and
if the count exceeds the predetermined threshold, determining the intermittent fault to be a permanent fault.

2. The method of claim 1, further including sending the permanent fault to a responder.

3. The method of claim 1, further including, if the signal does not indict the failure mode, offsetting the count by a predetermined parameter.

4. The method of claim 1, further including, if a fault state change is identified, determining if the failure mode is isolated, wherein:
if the failure mode is isolated, clearing the intermittent watch flag and initializing the count, and
if the failure mode is not isolated and a dominant failure mode is identified, setting the intermittent watch flag for the failure mode.

5. A system for diagnostic reasoning of faults appearing in a vehicle health monitoring system (VHM), comprising:
a diagnostic reasoner module (18) in communication with a vehicle, wherein the diagnostic reasoner module is adapted for:
identifying alternatively one of a signal or a fault state change based on an input, and
if a signal is identified, querying if the signal indicts a failure mode, wherein if the signal indicts the failure mode:
setting an intermittent watch flag for the failure mode,
incrementing a count representing a number of occurrences of the signal as an intermittent fault,
determining if the count exceeds a predetermined threshold, and
if the count exceeds the predetermined threshold, determining the intermittent fault to be a permanent fault.

6. The system of claim 5, wherein the diagnostic reasoner module is further adapted for sending the permanent fault to a responder.

7. The system of claim 5, wherein the diagnostic reasoner module is further adapted for, if the signal does not indict the failure mode, offsetting the count by a predetermined parameter.

8. The system of claim 5, wherein the diagnostic reasoner module is further adapted for, if a fault state change is identified, determining if the failure mode is isolated, wherein:
if the failure mode is isolated, clearing the intermittent watch flag and initializing the count, and
if the failure mode is not isolated and a dominant failure mode is identified, setting the intermittent watch flag for the failure mode.

9. The system of claim 5, wherein the diagnostic reasoner module is further adapted for calculating the threshold as a function of a predetermined tuning factor.

10. The system of claim 5, wherein the diagnostic reasoner module is further adapted for incrementing a count representing a number of occurrences of the signal as an intermittent fault pursuant to a Page-Hinkley algorithm.
